# EUROPÄISCHE PATENTSCHRIFT

(11) **EP 3 281 887 B1**
(45) Veröffentlichungstag und Bekanntmachung des Hinweises auf die Patenterteilung: **18.09.2019**
(21) Anmeldenummer: 16001792.7
(22) Anmeldetag: 12.08.2016
(51) Int. Cl.: B65G 1/00

(54) **PALETTENWECHSLER FÜR DEN SCHNELLEN AUSTAUSCH VON PALETTEN UNTER TRANSPORTGUT, OPTIONAL ZUSÄTZLICH MIT SCHIENEN ZUM HÖHENAUSGLEICH**
PALETTE CHANGER FOR THE RAPID EXCHANGE OF PALETTES UNDER TRANSPORTED GOODS, WITH ADDITIONAL OPTIONAL TRACKS FOR HEIGHT COMPENSATION
CHANGEUR DE PALETTES POUR L'ÉCHANGE RAPIDE DE PALETTES CHARGÉES DE MARCHANDISES, AVEC EN OPTION DES RAILS POUR L'AJUSTAGE EN HAUTEUR

(43) Veröffentlichungstag der Anmeldung: 14.02.2018
(73) Patentinhaber: Schauties, Ralf, 33790 Halle (Westf.) (DE); Wellerdiek, Lars, 33790 Halle (Westf.) (DE)
(72) Erfinder: Schauties, Ralf, 33790 Halle (Westf.) (DE); Wellerdiek, Lars, 33790 Halle (Westf.) (DE)
(74) Vertreter: Busse & Busse

(56) Entgegenhaltungen:
- CN-Y- 201 284 149
- DE-U1- 29 816 346
- US-A- 5 482 426
- US-A1- 2015 291 306
- Baust Gruppe: "Baust Palettenwechsler PW 1000 - Pallet Changer PW 1000", , 20 January 2016 (2016-01-20), page 1, XP054978837, Retrieved from the Internet: URL:https://www.youtube.com/watch?reload=9 &v=KTEhYVWaJqc [retrieved on 2018-11-02]

## Beschreibung

Im Transport- und Logistikbereich wird Transportgut im Allgemeinen auf Paletten gelagert, um es zum Be- und Entladen mit Hilfe von Flurfördergeräten (Gabelstapler, Gehstapler o.ä.) bewegen zu können. Aus unterschiedlichen Gründen kann es notwendig sein, die Palette unter dem Transportgut auszutauschen, beispielsweise, weil eine Palette defekt ist, weil eine Einwegpalette gegen eine Euro- Palette getauscht werden muß oder umgekehrt, weil eine Palette zu breit, zu lang, zu hoch bzw. zu niedrig für den Transport ist. Nach dem Stand der Technik wird für den Palettentausch das Transportgut auf dem herkömmlichen Weg entweder von Hand auf eine andere Palette umgeladen oder mit Hilfe einer Schiebeeinrichtung auf eine andere Palette geschoben. Beide Varianten sind wenig praxistauglich; die erste Variante (Umladen von Hand) ist zeit- und arbeitsaufwendig; die zweite Variante (Verschieben des Transportguts) ist schadensanfällig, weil das Transportgut bei dem Schiebevorgang beschädigt werden kann.

Aus dem Stand der Technik ist die Maschine Baust Palettenwechsler PW 1000 bekannt, bei der ein Fahrkorb mit drei einzelnen Wänden über zwei hintereinander positionierte Paletten gefahren wird, um einen auf einer der beiden Paletten stehenden Warenstapel auf die andere Palette zu schieben. Die Maschine ist aufgrund ihres Antriebs und des groß bauenden Fahrkorbs allerdings aufwendig in der Herstellung und im Betrieb. Die Maschine Baust Palettenwechsler PW 1000 stellt ein Palettenwechsler nach dem Oberbegriff des Anspruchs 1 dar.

Aus der Schrift US 5,482,426 A ist es bekannt, eine stationäre Wand als Gegenhalter für einen Warenstapel mit einer darin befindlichen Öffnung zu verwenden, um eine auszutauschende Palette mittels einer Tauschpalette durch die Öffnung zu schieben, wobei eine Stange oder ein anderer Abstandshalter unter die auszutauschende Palette positioniert und mit dieser beim Verschieben der Paletten mitbewegt wird.

Demgemäß ist es die Aufgabe der vorliegenden Erfindung, die Funktionsfähigkeit der bekannten Palettenwechsler zu verbessern.

Die Aufgabe wird für den gattungsgemäßen Palettenwechsler durch die kennzeichnenden Merkmale des Anspruchs 1 gelöst. Für das erfindungsgemäße Verfahren ergibt sich die Lösung aus den kennzeichnenden Merkmalen des Anspruchs 4.

Die vorliegende Erfindung ermöglicht einen schnellen Palettenwechsel, indem nicht das Transportgut umgeladen oder verschoben, sondern die auszutauschende Palette durch die Tauschpalette unter dem Transportgut weggeschoben wird. Der Palettenwechsler fixiert dabei das Transportgut, ohne es zu bewegen. Die Tauschpalette wird mit Hilfe eines Flurfördergeräts (Gabelstapler, Gehstapler o.ä.) oder einer sonstigen Schiebeeinrichtung direkt unter das Transportgut geschoben und verdrängt dabei gleichzeitig die auszutauschende Palette. Das Transportgut lagert nach diesem Vorgang auf der Tauschpalette und kann sofort weiterbefördert werden.

Der Palettenwechsler besteht aus einem rechteckigen, dreiwandigen Gestell, das mit dem Boden verschraubt oder in anderer Weise fixiert wird. In dieses Gestell wird das Transportgut mitsamt der auszutauschenden Palette abgestellt. Die hintere, der offenen Seite gegenüberliegende Wand des Gestells weist im unteren Bereich eine Spalte in üblicher Palettenhöhe auf, durch die die auszutauschende Palette weggeschoben wird (siehe Abbildung I.).

Zum Höhenausgleich bei unterschiedlich hohen Paletten ist unter den beiden seitlichen Wänden des Gestells jeweils eine nach unten abgeflachte Schiene angebracht, auf die das Transportgut mit der auszutauschenden niedrigen Palette abgestellt wird. Die höhere Tauschpalette wird beim Einschieben in den Palettenwechsler von den abgeflachten Platten zusammen mit dem Transportgut angehoben und kann so unter das Transportgut geschoben werden (siehe Abbildungen II. a und b.)
1 Dreiwandiges Gestell
2 Spalte in üblicher Palettenhöhe
3 Schienen zum Höhenausgleich

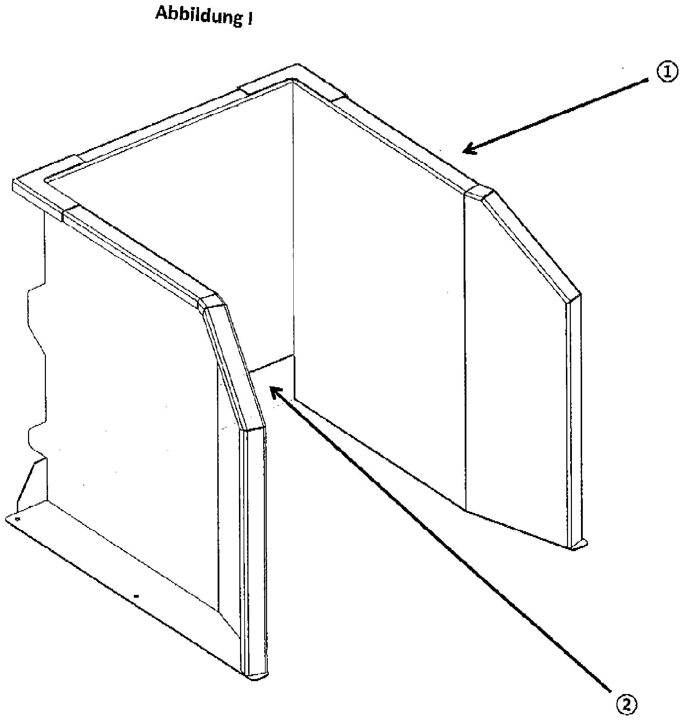

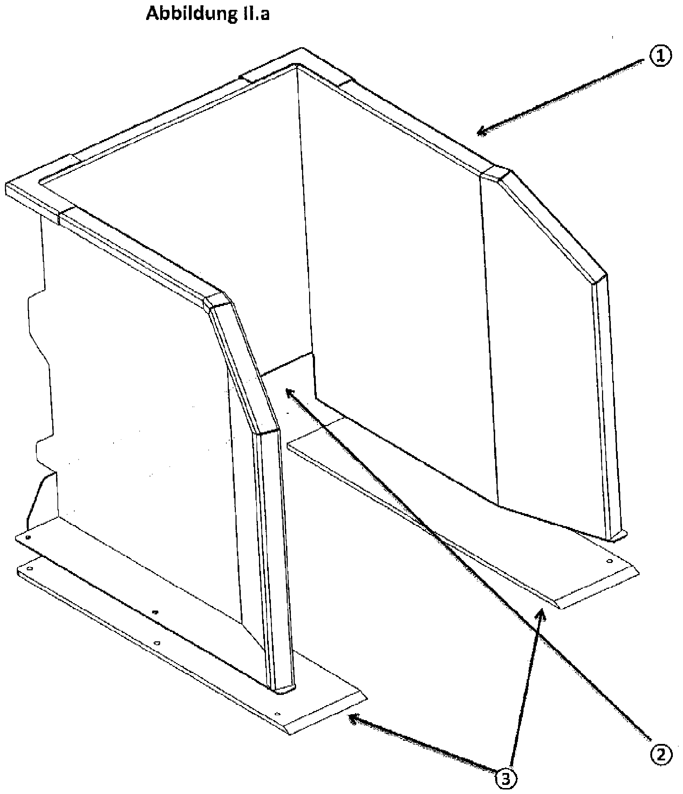

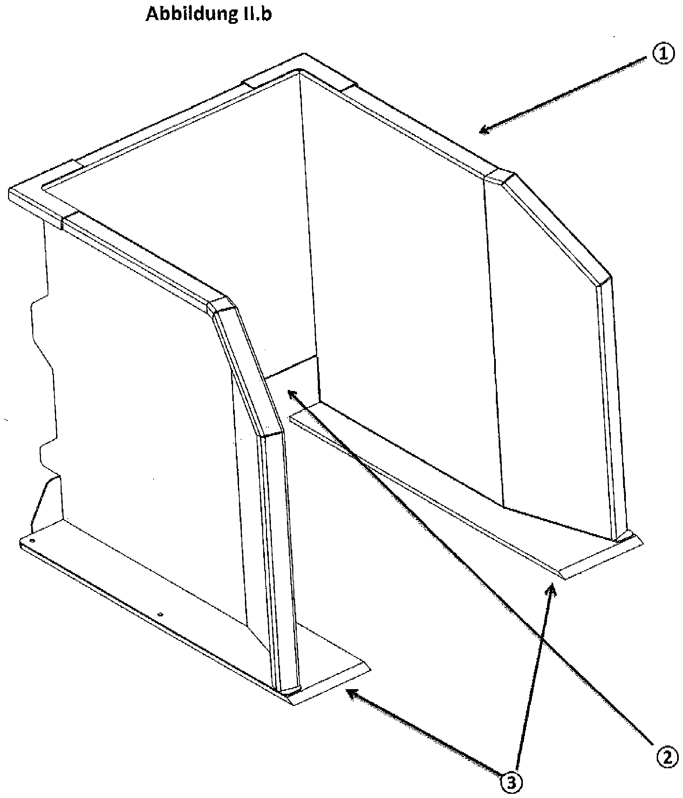

## Patentansprüche

1. Palettenwechsler mit einem rechteckigen, dreiwandigen Gestell (1), dessen hintere, der offenen Seite gegenüberliegende Wand im unteren Bereich eine Spalte (2) in üblicher Palettenhöhe aufweist, **dadurch gekennzeichnet, dass** das Gestell (1) für einen Palettenwechselvorgang auf dem Boden orstfest fixierbar ist und zwei nach unten abgeflachte Schienen (3) aufweist, die jeweils unter den beiden seitlichen Wänden des Gestells (1) zum Höhenausgleich angebracht sind.

2. Palettenwechsler nach Anspruch 1, **dadurch gekennzeichnet, dass** das Gestell (1) mit dem Boden verschraubt oder in anderer Weise fixiert ist.

3. Verfahren zum Austausch von Paletten, bei dem ein Palettenwechsler mit einem rechteckigen, dreiwandigen Gestell (1) auf einer auszutauschenden Palette lagerndes Transportgut fixiert, und eine Tauschpalette mit Hilfe eines Flurfördergerätes oder einer sonstigen Schiebeeinrichtung direkt unter das Transportgut geschoben wird, wobei die Tauschpalette gleichzeitig die auszutauschende Palette verdrängt und durch eine in der hinteren offenen Seite gegenüberliegenden Wand im unteren Bereich befindliche Spalte (2) des Gestells (1) wegschiebt, so dass das Transportgut nach diesem Palettenwechselvorgang auf der Tauschpalette lagert.

4. Verfahren nach Anspruch 3, **dadurch gekennzeichnet, dass** das Transport-gut mit einer niedrigen, auszutauschenden Palette auf zwei nach unten abgeflachten Schienen (3) des Palettenwechslers, die jeweils unter den beiden seitlichen Wänden des Gestells (1) zum Höhenausgleich angebracht sind, abgestellt wird und eine höhere Tauschpalette beim Einschieben in den Palettenwechsler von den abgeflachten Platten zusammen mit dem Transportgut angehoben und unter das Transportgut geschoben wird.

## Claims

1. Pallet changer comprising a rectangular, three-walled frame (1) of which the rear wall, which is opposite the open side, has a gap (2) of conventional pallet height in the lower region, **characterised in that**, for a pallet changing process, the frame (1) can be secured in place on the floor and comprises two rails (3) which are flattened at the bottom and can each be attached under the two side walls of the frame (1) for a height adjustment.

2. Pallet changer according to claim 1, **characterised in that** the frame (1) is screwed to the ground or is secured in a different manner.

3. Method for exchanging pallets, wherein a pallet changer comprising a rectangular, three-walled frame (1) secures an item to be transported, which is being stored on a pallet to be exchanged, and an exchange pallet is pushed directly under the item to be transported with the aid of an industrial conveying apparatus or other sliding device, the exchange pallet simultaneously displacing the pallet to be exchanged and pushing it away through a gap (2) in the frame (1) located in the lower region in the rear wall opposite the open side, such that the item to be transported is stored on the exchange pallet following this pallet changing process.

4. Method according to claim 3, **characterised in that** the item to be transported, together with a low pallet to be exchanged, is placed on two rails (3) of the pallet changer which are flattened at the bottom and are each attached under the two side walls of the frame (1) for a height adjustment, and, when being pushed into the pallet changer, a taller exchange pallet is lifted by the flattened panels, together with the item to be transported, and is pushed under the item to be transported.

## Revendications

1. Changeur de palettes avec un bâti (1) à trois parois, rectangulaire, dont la paroi arrière opposée au côté ouvert présente dans la zone inférieure une fente (2) à la hauteur de palette usuelle, **caractérisé en ce que** le bâti (1) peut être fixé pour un processus de changement de palettes sur le sol de manière stationnaire et présente deux rails (3) aplatis vers le bas qui sont montés respectivement sous les deux parois latérales du bâti (1) pour la compensation de hauteur.

2. Changeur de palettes selon la revendication 1, **caractérisé en ce que** le bâti (1) est vissé au sol ou est fixé d'une autre manière.

3. Procédé de remplacement de palettes, pour lequel un changeur de palettes avec un bâti (1) à trois parois, rectangulaire fixe des marchandises de transport logeant sur une palette à remplacer, et une palette d'échange est poussée à l'aide d'un chariot de manutention ou d'un autre dispositif de poussée directement sous les marchandises de transport, dans lequel la palette d'échange déplace simultanément la palette à remplacer et la pousse par une fente (2) du bâti (1) se trouvant dans la paroi opposée au côté ouvert arrière dans la zone inférieure de sorte que les marchandises de transport logent après ce processus de changement de palette sur la palette d'échange.

4. Procédé selon la revendication 3, **caractérisé en ce que** les marchandises de transport sont déposées avec une palette basse à remplacer sur deux rails (3) aplatis vers le bas du changeur de palettes qui sont montés respectivement sous les deux parois latérales du bâti (1) pour la compensation de hauteur et une palette d'échange plus haute est relevée lors de l'enfoncement dans le changeur de palettes des plaques aplaties conjointement avec les marchandises de transport et est poussée sous les marchandises de transport.
